# EUROPÄISCHE PATENTANMELDUNG

(11) **EP 1 604 872 A1**
(43) Veröffentlichungstag der Anmeldung: **14.12.2005**
(21) Anmeldenummer: 05090236.0
(22) Anmeldetag: 23.12.2002
(51) Int. Cl.: B60R 21/20

(54) **Gasstromverteiler für einen Seitenairbagmodul**

(30) Priorität: 04.01.2002 DE 20200365 U; 15.11.2002 DE 20217892 U
(62) Teilanmeldung aus: 02799038.1
(71) Anmelder: TAKATA-PETRI (Ulm) GmbH, 89081 Ulm (DE)
(72) Erfinder: Siegel, Wolfgang, 89567 Sontheim/Brenz (DE); Aulbach, Alexander, 63743 Aschaffenburg (DE); Heuschmid, Rainer, 89075 Ulm (DE); Sendelbach, Hans-Peter, 89250 Senden (DE); Weyrich, Christian, 89231 Neu-Ulm (DE)
(74) Vertreter: Baumgärtel, Gunnar

(57) **Zusammenfassung**

Die Erfindung betrifft einen Gastromverteiler für ein Seitenairbagmodul zum gezielten Verteilen eines aus den Ausströmöffnungen eines Gasgenerators austretenden Gasstromes in einem durch den Gasgenerator aufzublasenden Gassack. Erfindungsgemäß ist vorgesehen, dass der Gasstromverteiler durch eine den Gasgenerator zumindest im Bereich der Ausströmöffnungen umschließende, formstabile Aufnahme (1, 3, 5) gebildet wird und die Aufnahme (1, 3, 5) Austrittsöffnungen (14a, 14b, 15, 18, 19, 101, 102) aufweist, durch die hindurch aus dem Gasgenerator in das Innere der Aufnahme (10) eingeströmtes Gas austreten und in den aufzublasenden Gassack strömen kann, wobei die Größe mindestens einer Austrittsöffnung (15) einstellbar ist.

## Beschreibung

Die Erfindung betrifft einen Gasstromverteiler für ein Seitenairbagmodul nach dem Oberbegriff des Anspruchs 1.

Ein Seitenairbagmodul dient in einem Crash-Fall zum Schutz eines Fahrzeuginsassen vor einer Kollision mit seitlichen Teilen der Fahrzeugkarosserie und ist in der Regel in einer Fahrzeugtür oder seitlich an einem Fahrzeugsitz angeordnet. Das Seitenairbagmodul umfasst neben einem zum Schutz des jeweiligen Fahrzeuginsassen in einem Crash-Fall aufblasbaren Gassack, einen Gasgenerator zum Aufblasen des Gassackes sowie ein Gehäuse zur Aufnahme von Gasgenerator und Gassack. Damit ein Airbagmodul eine möglichst optimale Rückhalte- und somit Schutzfunktion für einen Fahrzeuginsassen entfalten kann, ist eine gezielte, definierte Entfaltung des Gassackes beim Aufblasen mittels des Gasgenerators von besonderer Bedeutung.

Es ist bei Seitenairbagmodulen bekannt, den Gasstrom innerhalb des Gassackes durch in bzw. an der Gassackhülle vorgesehene Abnäher oder Gewebelappen zu lenken und in definierter Weise innerhalb des Gassackes zu verteilen. Hierbei wird der Gassack durch die Abnäher bzw. Gewebelappen in unterschiedliche Bereiche unterteilt, die eine definierte, vorgebbare Gasströmung beim Aufblasen des Gassackes gewährleisten sollen.

Der Erfindung liegt das Problem zugrunde, einen Gasstromverteiler der eingangs genannten Art zu schaffen, der zu einer gezielten, definierten Entfaltung und Positionierung des mit dem Gasgenerator aufzublasenden Gassackes beiträgt.

Dieses Problem wird erfindungsgemäß durch die Schaffung eines Gasstromverteilers mit den Merkmalen des Anspruchs 1 gelöst.

Danach wird der Gasstromverteiler durch eine den Gasgenerator zumindest im Bereich seiner Ausströmöffnungen umschließende, formstabile Aufnahme gebildet.

Die erfindungsgemäße Lösung hat den Vorteil, dass der Gasstromverteiler eine unmittelbare, direkte Beeinflussung des aus dem Gasgenerator austretenden Gasstromes bewirkt, um eine definierte Entfaltung und Positionierung des aufzublasenden Gassackes zu erreichen. So kann durch geeignete Gestaltung des den Gasgenerator aufnehmenden Bereiches des Gasstromverteilers die Entfaltungsrichtung des Gassackes frühzeitig und nachhaltig in einer vorgegebenen Weise definiert werden. Auch das Öffnen der Abdeckung des Airbagmoduls lässt sich in diesem Zusammenhang positiv beeinflussen. Ferner kann durch eine Lenkung des Gasstromes das Aufblasverhalten des Gassackes in einem oop-Fall (out of position-Fall), in dem sich der zu schützende Insasse außerhalb seiner normalen Sitzposition befindet, so beeinflusst werden, dass die Gefahr einer Verletzung eines Insassen minimiert wird.

Schließlich kann durch eine gezielte Verteilung der Gasmenge bzw. des Gasstromes das aus dem Gasgenerator ausströmende Gas definiert in die eine oder andere Kammer eines Mehrkammergassackes geleitet werden.

Die vorstehend beschriebenen Effekte werden insbesondere dadurch erreicht, dass das aus den Ausströmöffnungen des Gasgenerators austretende Gas unmittelbar nach dem Austreten zunächst in der durch den Gasstromverteiler gebildeten Aufnahme gesammelt wird und dann in definierter Weise, entlang einer vorgebbaren Richtung, in das Innere des aufzublasenden Gassackes weitergeleitet wird.

Der Gasstromverteiler besteht aus einem derart formstabilen Material, z.B. Metall oder Druckguss, dass die durch den Gasstromverteiler gebildete Aufnahme durch den aus dem Gasgenerator austretenden Gasstrom nicht spürbar verformt wird. Im Unterschied zu einem Gasstromverteiler, der durch in der Gassackhülle vorgesehene Abnäher, Gewebelappen, flexible Schläuche oder dergleichen gebildet wird, werden demnach gemäß der vorliegenden Erfindung definierte, durch den Gasstrom nicht beeinträchtigbare Bedingungen für die Gasstromverteilung geschaffen. Allerdings können an der Aufnahme des Gasstromverteilers einzelne Abschnitte, z.B. in Form einer Klappe, vorgesehen sein, die durch den Gasstrom gezielt bewegbar sind, um eine Austrittsöffnung für den Gasstrom freizugeben.

Die Aufnahme des Gasstromverteilers ist insbesondere ausgebildet zum Einsetzen eines Rohrgasgenerators, der als Bestandteil eines Seitenairbagmoduls in einer Fahrzeugtür oder an einem Fahrzeugsitz anzuordnen ist. Der Gasstromverteiler weist hierzu einen Aufnahmebereich auf, der den Rohrgasgenerator umschließt und rohrförmig, z.B. im Querschnitt mehreckig oder kurvenartig ausgebildet ist. In einer bevorzugten Ausführungsform ist die Aufnahme des Gasstromverteilers ausgebildet zum Einlassen eines Gasstromes in einen aufzublasenden Gassack im Wesentlichen entlang der Mantelfläche der Aufnahme, z.B. in axialer Richtung. In einem solchen Fall gelangt also der üblicherweise senkrecht aus einem Gasgenerator austretenden Gasstrom nicht einfach entlang dieser Richtung in den Gassack sondern wird zuvor umgelenkt, nämlich in eine Richtung entlang der Mantelfläche des den Gasgenerator zumindest im Bereich seiner Ausströmöffnungen umgebenden Gasstromverteilers.

Zum definierten Einlassen des Gasstromes in den aufzublasenden Gassack weist die den Gasstromverteiler bildende Aufnahme mindestens eine Austrittsöffnung auf, durch die hindurch aus dem Gasgenerator in das Innere der Aufnahme eingeströmtes Gas austreten und in den aufzublasenden Gassack strömen kann. Bei einem Gasstromverteiler mit einem rohrförmigen Aufnahmebereich können derartige Austrittsöffnungen insbesondere in dem Mantel des Aufnahmebereiches vorgesehen sein.

In einer Weiterbildung der Erfindung kann die Größe der Austrittsöffnungen einstellbar sein, um sie unterschiedlichen Gegebenheiten anpassen zu können.

Ferner kann die mindestens eine Austrittsöffnung des Gasstromverteilers zumindest teilweise mit einer Abdeckung verschlossen sein, die durch den aus dem Gasgenerator austretenden Gasstrom geöffnet wird und hierdurch das Einströmen des Gases in den aufzublasenden Gassack ermöglicht. Die Austrittsöffnungen sind dabei vorzugsweise angeordnet und ausgebildet zur Fortleitung des aus einem Rohrgasgenerator austretenden Gasstromes in axialer Richtung, d.h. entlang der Erstreckungsrichtung des Gasgenerators. Die Abdeckung kann im geöffneten Zustand zugleich als Lenkelement dienen, mit dem durch die Austrittsöffnung des Gasstromverteilers strömenden Gas eine Strömungsrichtung beim Einströmen in den aufzublasenden Gassack vorgegeben wird.

Der Gasstromverteiler ist vorzugsweise derart ausgebildet, also derart an die äußere Form, Größe und Ausströmöffnungen des Gasgenerators angepasst, dass das aus dem Gasgenerator ausströmende Gas zumindest teilweise zunächst an einer Wand des Aufnahmebereiches reflektiert wird, bevor es aus dem Gasstromverteiler austritt. Hierdurch wird vermieden, dass die aus dem Gasgenerator ausströmenden heißen Gase unmittelbar mit dem Gewebe oder den Nähten des aufzublasenden Gassackes oder anderen hitzeempfindlichen Teilen in Berührung kommen. Stattdessen kommt es zunächst zu einer Abkühlung des Gases innerhalb des Aufnahmebereiches des Gasstromverteilers, bevor das Gas weiter in den aufzublasenden Gassack strömt. Zudem wird auch die Geschwindigkeit des Gasstromes gebremst. Hierdurch werden geringere Anforderungen an die Beschichtung der Gassackhülle gestellt. Ferner kann die Beeinflussung des Gasstromes durch die Wände des Aufnahmebereiches des Gasstromverteilers auch zur Lenkung des Gasstromes an sich dienen, insbesondere um eine Ablenkung des Gasstromes in axialer Richtung, entlang der Erstreckungsrichtung eines Rohrgasgenerators beim Passieren der Austrittsöffnungen des Gasstromverteilers zu ermöglichen.

Durch Variation des dem Gas innerhalb des Aufnahmebereiches des Generatorträgers zur Verfügung stehenden Volumens, d. h. in Abhängigkeit von dem Abstand der Außenwand des Gasgenerators zur Innenwand des Aufnahmebereiches des Gasstromverteilers, lässt sich der Gasdruck innerhalb des Aufnahmebereiches beeinflussen. Dies wirkt wiederum auf die Gasmengenverteilung über die entsprechenden Austrittsöffnungen des Aufnahmebereiches zurück. Die Größe der Austrittsöffnungen des Aufnahmebereiches (Austrittsfläche der Öffnungen) bestimmt unter anderem die Aufblasgeschwindigkeit des Luftsackes sowie die Gasmengenverteilung innerhalb verschiedener Luftsackbereiche, was insbesondere bei Mehrkammersystemen von Bedeutung ist, bei denen in unterschiedlichen Kammern unterschiedliche Innendrücke erzeugt werden sollen.

Die Geschwindigkeit des Entfaltungsprogramms des Luftsackes kann zudem auch durch die Form des Aufnahmebereiches (hohlzylindrisch oder andere Rohrform) beeinflusst werden.

In einer Weiterbildung der Erfindung kann der Gasstromverteiler zugleich als Generatorträger dienen, der den Gasgenerator aufnimmt und über einen Verbindungsbereich mit einem tragenden Teil eines Kraftfahrzeuges, insbesondere einem tragenden Teil einer Fahrzeugtür oder eines Fahrzeugsitzes, verbunden ist.

Der Verbindungsbereich des Generatorträgers, der zu einer mittelbaren oder unmittelbaren Verbindung mit einem tragenden Teil eines Kraftfahrzeugs eingerichtet und ausgebildet ist, kann beispielsweise als ein Flansch ausgestaltet sein, der von dem Aufnahmebereich des Generatorträgers absteht. In einer bevorzugten Ausführungsform ist der Generatorträger einstückig ausgebildet, d. h., der Verbindungsbereich des Generatorträgers ist einstückig an dessen Aufnahmebereich angeformt.

Von Vorteil ist, mindestens einen Bereich der Aufnahme als Prallelement auszubilden, so dass zwischen dem Prallelement und dem Gasgenerator mindestens ein Gasleitkanal zur Leitung des Gasstroms verläuft. Dies hat den Vorteil, dass der Gasstromverteiler den aus dem Gasgenerator austretenden Gasstrom unmittelbar und direkt beeinflusst und durch die Ausbildung des Gasleitkanals das ausströmende Gas definiert in eine bestimmte Region des aufzublasenden Gassackes geleitet werden kann. Durch die Leitung des Gasstroms kann das Aufblasverhalten des Gassackes auch in einem oop-Fall, in dem sich der zu schützende Insasse außerhalb seiner normalen Sitzposition befindet, so beeinflusst werden, dass die Gefahr einer Verletzung des Kraftfahrzeuginsassen durch den sich entfaltenden Gassack verringert wird. Durch eine gezielte Verteilung der Gasmenge bzw. des Gasstromes des aus dem Gasgenerator ausströmenden Gases kann das Gas weiterhin definiert in eine oder mehrere Kammern eines Mehrkammergassackes oder in mehrere Gassäcke geleitet werden. Der erfindungsgemäße Gasstromverteiler kann dabei auch zur Anbindung mehrerer Gassäcke an einen Gasgenerator dienen.

Der Gasleitkanal kann dabei entweder zwischen der Außenseite des Gasgenerators und der Innenseite der als Prallelement ausgebildeten Aufnahme ausgebildet werden oder aber zwischen der Außenseite eines den Gasgenerator umschließenden Bereichs der Aufnahme und der Innenseite des Prallelementes.

In einer bevorzugten Ausführungsform der Erfindung weist das Prallelement einen im Wesentlichen kreisförmigen Querschnitt auf und ist so angebracht, dass der Gasleitkanal im Wesentlichen einen kreisringförmigen oder einen halbmondförmigen Querschnitt aufweist. Durch eine entsprechende Dimensionierung des Gasleitkanals können so aufgrund eines niedrigen Strömungsquerschnitts sehr hohe Gasausströmgeschwindigkeiten und damit ein sehr hoher Impulsübertrag auf die zu entfaltende Gassackhülle übertragen werden.

Das Prallelement ist vorteilhaft so ausgebildet, dass auch bei einer plastischen Verformung, wie sie beispielsweise beim Einbauvorgang oder beim Betrieb des Gasgenerators auftreten kann, die Funktion des Prallelements erhalten bleibt. So können beispielsweise auch lokale oder temporäre Hochdruckmaxima des Gasstroms ausgeglichen werden, ohne dass die Funktionsweise des Gasstromverteilers beeinträchtigt wird.

Die Gasaustrittsbereiche der Gasleitkanäle münden vorteilhaft in mindestens einen Gassack oder in unterschiedliche Gassackkammern ein. Bei der Verwendung mehrerer Gassackkammern oder mehrerer Gassäcke kann das Prallelement zur Trennung zweier Gassackkammern voneinander oder als einzige Verbindung zwischen zwei Gassäcken dienen. Eine zwischen zwei Gassäcken verlaufende Trennfuge kann dabei im Bereich des Prallelements verlaufen, so dass eine Kommunikation zwischen den Gassäcken nur über den Gasleitkanal möglich ist. Weiterhin ist es vorteilhaft, die Trennfuge über das Prallelement gasdicht abzuspannen.

Ein Seitenairbagmodul mit einem Gasgenerator zum Aufblasen eines Gassackes und einem erfindungsgemäß gestalteten Gasstromverteiler ist durch die Merkmale des Anspruchs 39 charakterisiert.

In einer bevorzugten Ausführungsform dieses Airbagmoduls ist der Aufnahmebereich des Gasstromverteilers innerhalb des aufzublasenden Gassackes angeordnet. Hierdurch wird ein besonders kompakter Aufbau des Airbagmoduls ermöglicht.

Weitere Merkmale und Vorteile der Erfindung werden bei der nachfolgenden Beschreibung eines Ausführungsbeispiels anhand der Figuren deutlich werden. Es zeigen:
- Figur 1: eine perspektivische Darstellung eines Gasstromverteilers zur Aufnahme eines Gasgenerators;
- Figur 2: eine perspektivische Rückansicht des Gasstromverteilers aus Figur 1;
- Figur 3: eine erste Abwandlung des Ausführungsbeispiels aus Figur 1 und 2;
- Figur 4: eine zweite Abwandlung des Ausführungsbeispiels aus Figur 1 und 2;
- Figur 5: eine Rückansicht des Gasstromverteilers aus Figur 4;
- Figur 6: eine perspektivische Darstellung eines erfindungsgemäßen Gasstromverteilers in einer weiteren Ausführungsform;
- Figur 7: eine Explosionszeichnung des Gasstromverteiler aus Figur 6;
- Figur 8: eine perspektivische Darstellung eines erfindungsgemäßen Gasstromverteilers in einer weiteren Ausführungsform;
- Figur 9: Aufsicht auf den Gasstromverteiler aus Figur 8;
- Figur 10: seitliche Ansicht des Gasstromverteiler aus Figur 8 und 9;
- Figur 11: Querschnitt durch den Gasstromverteiler aus Figur 8, 9 und 10;
- Figur 12: Perspektivische Darstellung eines erfindungsgemäßen Gasstromverteilers in einer weiteren Ausführungsform;
- Figur 13: Seitliche Ansicht des Gasstromverteilers aus Figur 12 mit eingesetztem Gasgenerator; und
- Figur 14: Querschnitt durch den Gasstromverteiler aus Figur 12 und 13.

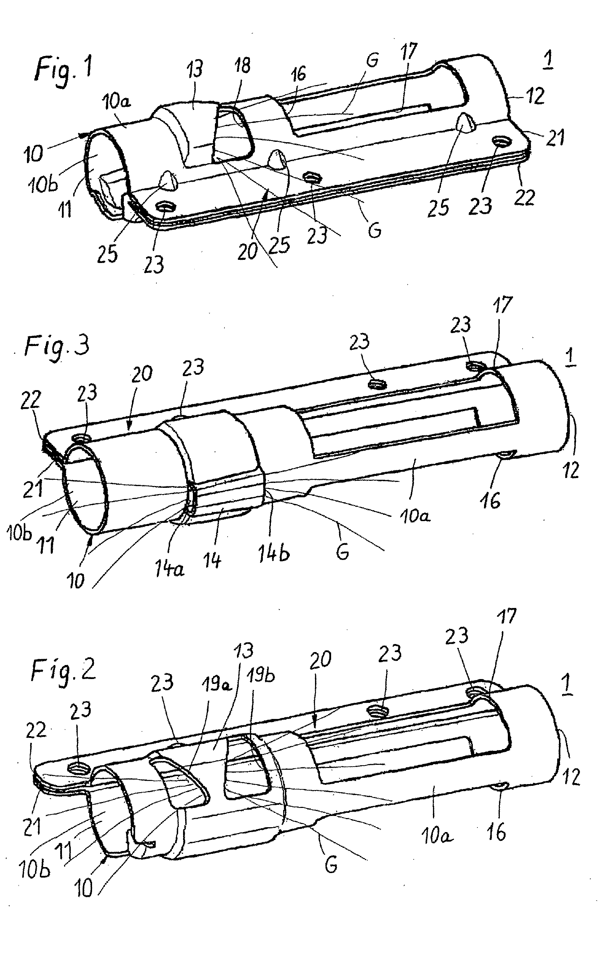

In Figur 1 ist perspektivisch ein Gasstromverteiler in Form eines Generatorträgers 1 zur Aufnahme eines Gasgenerators dargestellt. Der Generatorträger 1 bildet einen Bestandteil eines Seitenairbagmoduls und kann einen Gasgenerator tragen, mit dem zum Schutz eines Fahrzeuginsassen in einem Crash-Fall sensorgesteuert ein Gassack aufblasbar ist. Der Gassack und der Gasgenerator sind üblicherweise in einem Modulgehäuse angeordnet, das eine sich beim Aufblasen des Gassackes öffnende Abdeckung aufweist, so dass sich der Gassack in Richtung auf den zu schützenden Fahrzeuginsassen entfalten kann.

Der Gasgenerator ist über den Generatorträger 1 entweder mit einem tragenden Teil des Airbagmoduls, z.B. dem Gehäuse des Airbagmoduls, oder unmittelbar mit einem tragenden Teil der Fahrzeugkarosserie, z.B. einem Türblech oder einem Sitzgestell im Falle eines Seitenairbags, verbunden. Hierdurch ist der Gasgenerator über den Generatorträger an ein tragendes Fahrzeugteil angekoppelt.

Gemäß Figur 1 ist der Aufnahmebereich 10 des Generatorträgers 1 rohrförmig, insbesondere holzylindrisch ausgestaltet, so dass ein innerhalb des Aufnahmebereiches 10 angeordneter Rohrgasgenerator von dem Aufnahmebereich 10 umschlossen wird. Der Aufnahmebereich 10 bildet im Querschnitt einen geschlitzten Ring, von dessen beiderseits des Schlitzes gelegenen Enden jeweils radial eine Platte 21 bzw. 22 absteht.

Der holzylindrische Aufnahmebereich 10 weist zwei offene Deckflächen 11, 12 an seinen Stirnseiten auf, die das Einführen eines Gasgenerators in den Aufnahmebereich 10 unter Aufweitung des besagten Schlitzes ermöglichen, sowie zwei großflächige Ausnehmungen 16, 17 in seiner Mantelfläche, die der Reduzierung des Gewichtes des Generatorträgers 1 dienen. Neben der einen großflächigen Ausnehmung 16 ist zusätzlich eine Austrittsöffnung 18 in der Mantelfläche vorgesehen, die teilweise von einer Erhebung 13 der die Außenwand 10a des Aufnahmebereiches bildenden Mantelfläche überdeckt ist und die bei eingeführtem Gasgenerator oberhalb der Ausströmöffnungen des in den Generatorträger 1 einzuführenden Gasgenerators liegt. Die Erhebung 13 dient als Leitelement, mit dem die Richtung des aus der Austrittsöffnung 18 austretenden Gasstromes beeinflussbar ist.

Durch die letztgenannte Austrittsöffnung 18 hindurch können aus einem Gasgenerator in das Innere des Aufnahmebereiches 10 eingeströmte Gase weiter in den aufzublasenden Gassack gelangen. Der Aufnahmebereich 10 des Generatorträgers 1 wird hierzu vorzugsweise zusammen mit dem darin angeordneten Gasgenerator innerhalb des aufzublasenden Gassackes des Airbagmoduls angeordnet.

Die Anordnung, Form und Größe der Austrittöffnung 18 des Aufnahmebereiches 10, durch die hindurch aus einem Gasgenerator strömendes Gas in den aufzublasenden Gassack gelangen kann, sowie die Erhebung 13 bestimmen die Richtung und Geschwindigkeit, mit der das Gas in den Gassack eintritt. Vorliegend wird der durch die Austrittsöffnung 18 strömende Gasstrom G mittels der Erhebung 13 entlang der Mantelfläche des Aufnahmebereiches 10, insbesondere in axialer Richtung, geleitet.

Wie anhand der Rückansicht gemäß Figur 2 deutlich wird, sind in dem Mantel des Aufnahmebereiches 10 und der obigen Austrittsöffnung 18 radial gegenüberliegend beiderseits einer Erhebung 13 zwei weitere Austrittsöffnungen 19a, 19b vorgesehen, durch die hindurch ein Gasstrom G entlang der Fläche der Außenwand 10a des Aufnahmebereiches 10 austreten kann, und zwar insbesondere in axialer Richtung des längserstreckten Generatorträgers 1.

Der in dem Aufnahmebereich 10 des Generatorträgers 1 aufzunehmende Gasgenerator kann dort insbesondere derart angeordnet sein, dass aus den Ausströmöffnungen dieses Gasgenerators strömendes Gas gegen die Innenwand 10b des Aufnahmebereiches 10 geleitet wird. Die Ausströmöffnungen des Gasgenerators befinden sich dabei vorzugsweise im Bereich des mit den Austrittsöffnungen 18, 19a, 19b versehenen Abschnittes des Aufnahmebereiches 10 des Gasgeneratorträgers 1. Das aus dem Gasgenerator in das Innere des Generatorträgers 1 strömende Gas wird zunächst an der Innenwand 10b des Aufnahmebereiches 10 reflektiert, bevor es durch die hierfür vorgesehenen Öffnungen 18, 19a, 19b des Aufnahmebereiches 10 in den aufzublasenden Gassack gelangt. Dadurch wird der Gasstrom vor dem Auftreffen auf eventuell hitzeempfindlichen Teile des Gassackes, wie z. B. die Gassackhülle oder Nähte, etwas abgekühlt und gebremst. Die Gefahr einer Beschädigung des Gassackes durch heiße Gase lässt sich hierdurch erheblich vermindern.

An dem Aufnahmebereich 10 des Generatorträgers 1 ist einstückig ein Verbindungsbereich 20 mit Befestigungsöffnungen 23 angeformt, über den der Generatorträger mit einem tragenden Teil des Airbagmoduls oder einer Kraftfahrzeugkarosserie verbindbar ist. Der Verbindungsbereich 20 ist als Flansch ausgebildet und besteht aus zwei aneinander anliegenden, einstückig an dem Aufnahmebereich 10 angeformten Platten 21, 22. Hierzu bildet der Aufnahmebereich 10 im Querschnitt einen geschlitzten Ring, an dessen beide Enden jeweils eine der Platten 21, 22 angeformt ist. Zur Stabilisierung des Verbindungsbereiches 20 sind zusätzlich Versteifungselemente 25 vorgesehen, über die der Verbindungsbereich 20 zusätzlich mit dem Aufnahmebereich 10 verbunden ist.

Das in Figur 3 dargestellte Ausführungsbeispiel eines Generatorträgers unterscheidet sich von dem in den Figuren 1 und 2 dargestellten lediglich hinsichtlich der Ausbildung zweier Austrittsöffnungen, die in der Wand des Aufnahmebereiches 10 vorgesehen sin. Im übrigen stimmen die beiden Ausführungsbeispiele überein, so dass diesbezüglich auf die Ausführungen zu Figur 1 verwiesen wird. Übereinstimmende Bestandteile des Generatorträgers sind in den beiden Figuren mit identischen Bezugszeichen versehe n.

Gemäß Figur 3 werden zwei neben den beiden großflächigen Ausnehmungen 16, 17 gelegene Austrittsöffnung 14a, 14b durch die beiden offenen Stirnseiten eines Kanals 14 gebildet, der als eine Erhebung an der Außenwand 10a des Aufnahmebereiches 10 angeformt ist. Die durch die offenen Stirnseiten 14a, 14b austretenden Gase G strömen zunächst parallel zur Außenwand 10a des Aufnahmebereiches 10, vorwiegend in axialer Richtung des Generatorträgers 1, und gelangen dann in den aufzublasenden Gassack.

Der Generatorträger 1 wird in einem Fahrzeug derart eingebaut, dass sich seine Längsachse im Wesentlichen entlang der vertikalen Fahrzeugachse erstreckt. Der aus dem Gastromverteiler in Form eines Generatorträgers austretende Gasstrom wird daher durch die jeweiligen Austrittsöffnungen 14a, 14b, 18, 19a, 19b hindurch im wesentlichen in vertikaler Richtung nach oben bzw. unten gelenkt.

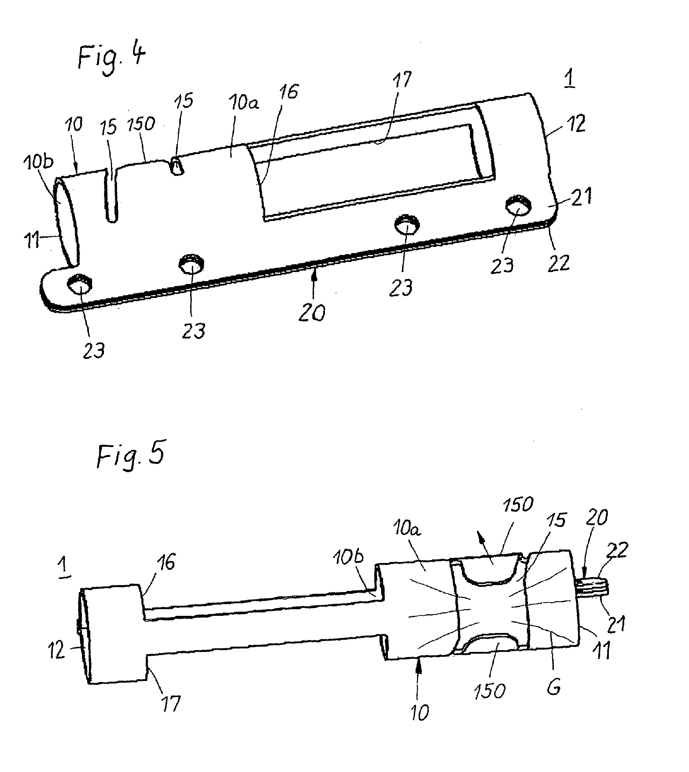

In den Figuren 4 und 5 ist eine weitere Abwandlung des Ausführungsbeispiels aus den Figuren 1 und 2 dargestellt, wobei der Unterschied ausschließlich in der Ausbildung der Austrittsöffnungen besteht, durch die hindurch aus einem Gasgenerator in den Gasstromverteiler (Generatorträger 1) eingeströmtes Gas weiter in einen aufzublasenden Gassack strömen kann.

Gemäß den Figuren 4 und 5 ist neben den großflächigen Ausnehmungen 16, 17 in dem Aufnahmebereich 10 des Generatorträgers 1 eine Austrittsöffnung 15 angeordnet, die teilweise durch eine Abdeckung in Form von Laschen 150 verschlossen ist. Die Ausnehmung 15 erstreckt sich dabei mit schlitzförmigen Ausläufern entlang der seitlichen Ränder der Laschen 150, so dass diese nur in einem Endabschnitt mit der Mantelfläche des rohrförmigen Aufnahmebereiches 10 verbunden sind.

Das nach dem Auslösen des Airbagmoduls aus dem Gasgenerator austretende Gas, das insbesondere gegen die Innenwand 10a des Aufnahmebereiches 10 strömt, hebt hierbei die Laschen 150 an, die die Austrittsöffnung 15 teilweise verdecken, wie in Figur 5 anhand des Doppelpfeils angedeutet, so dass die Laschen 150 schräg von der Mantelfläche des rohrförmigen Aufnahmebereiches 10 abstehen. Hierdurch wird zum einen die Querschnittsfläche der Austrittsöffnung 15 vergrößert, durch die hindurch das aus dem Gasgenerator ausgetretene Gas in den aufzublasenden Gassack strömen kann. Gleichzeitig bilden die Laschen 150 nach dem Umbiegen nach außen Leitelemente, die dazu beitragen, den Gasstrom G beim Durchströmen der Austrittsöffnung 15 entlang der Mantelfläche des rohrförmigen Aufnahmebereiches 10 des Generatorträgers 1 zu leiten. Insbesondere wirken die Laschen 150 in diesem Zustand einem radialen und tangentialen Ausströmen der Gase entgegen, so dass der Gasstrom G vor allem eine Komponente in axialer Richtung des rohrförmigen Aufnahmebereiches 10 aufweist.

Durch Variation der Geometrie der Austrittsöffnung 15 und der Laschen 150 sowie durch die hiermit verbundene Vorgabe der Richtung, entlang der die Laschen 150 durch den Druck des Gasstromes nach außen umgebogen werden, kann die Strömungsrichtung des durch die Austrittsöffnung 15 tretenden Gases beeinflusst werden.

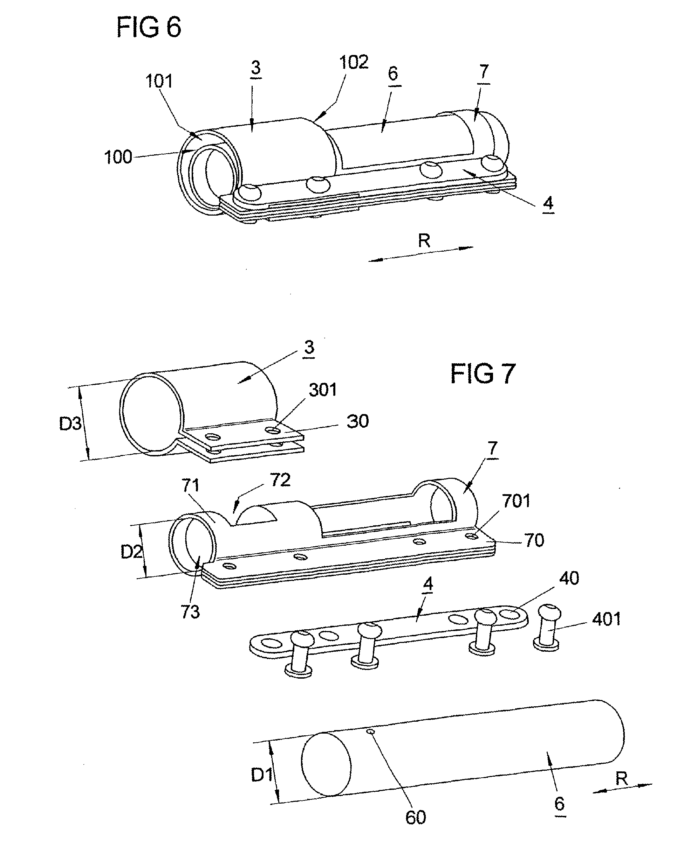

In den Figuren 6 und 7 ist ein erfindungsgemäßer Gasstromverteiler in einer weiteren Ausführungsform gezeigt. Der Gasstromverteiler weist eine Aufnahme in Form eines Prallelements 3 auf, das einen Rohrgasgenerator 6 im Bereich der Gasausströmöffnungen 60 des Rohrgasgenerators 6 umschließt. Das Prallelement 3 hat dabei die Form einer schellenförmigen Aufnahme, die den Rohrgasgenerator 6 weitgehend berührungslos umschließt. Zwischen dem schellenförmigen Prallelement 3 und dem Rohrgasgenerator 6 wird dadurch ein Gasleitkanal 100 zur Leitung des aus den Gasausströmöffnungen 60 des Rohrgasgenerators 6 ausströmenden Gasstroms gebildet.

Der Rohrgasgenerator 6 wird in einer ebenfalls schellenförmig ausgebildeten Befestigungsvorrichtung 7 aufgenommen und ist über diese an einer hier nicht dargestellten Kraftfahrzeugstruktur befestigbar. Zur Befestigung wird der Rohrgasgenerator 6 dabei in einer zylinderförmigen Ausnehmung 73 des schellenförmigen Befestigungsetementes 7 aufgenommen. Im Bereich der Gasaustrittsöffnungen 60 des Rohrgasgenerators 6 weist das Befestigungselement 7 einen ausgeschnittenen Bereich 72 auf, so dass das aus den Gasausströmöffnungen 60 ausströmende Gas von dem schellenförmigen Befestigungselement 7 nicht an seiner Ausströmung behindert wird.

Das Befestigungselement 7 weist darüber hinaus einen Befestigungsbereich 70 auf, der über in Bohrungen 701, 40 geführte Fügeelemente in Form von Nieten und/oder Schrauben 401 zur Anbindung des Rohrgasgenerators 6 mitsamt dem Prallelement 3 an eine Kraftfahrzeugstruktur dient. Am Befestigungsbereich 70 kann ein Luftsack zwischen dem Befestigungsbereich 70 und einer Klemmschiene 4 derart eingebracht werden, dass die Gasleitvorrichtung vom Luftsackgewebe umschlossen wird. Durch Zusammenziehen der Fügeelemente 401 wird der Luftsack um das Prallelement herum gestrafft und abgedichtet bzw. fest mit der Gasleitvorrichtung und/oder einer Anbindung an die Fahrzeugstruktur verbunden.

Das Prallelement 3 weist ebenfalls einen Befestigungsabschnitt 30 auf, in den ebenfalls durch Bohrungen 301 nietenförmige Befestigungsmittel 401 geführt werden können und zu einer Befestigung des schellenförmigen Prallelementes 3 an dem schellenförmigen Befestigungselement 7 führen.

Zwischen dem Gasgenerator 1 und dem schellenförmigen Prallelement 3 bildet sich ein halbmondförmiger Gasleitkanal 100 aus. Das aus den Gasausströmöffnungen 60 des Rohrgasgenerators 6 ausströmende Gas prallt dabei zunächst an das schellenförmige Prallelement 3 und wird dann in dem Gasleitkanal 100 in Richtung zweier gegenüberliegender Gasausströmbereiche 101, 102 geleitet. Die aus den beiden Gasaustrittsbereichen 101, 102 austretenden Gasströme treten in der hier dargestellten Ausführungsform in zueinander im Wesentlichen entgegengesetzten Richtungen und entlang der Rohrachse R des Rohrgasgenerators aus. Der Gasleitkanal 100 weist dabei einen Strömungsquerschnitt auf, der sich aus dem Außendurchmesser D2 des schellenförmigen Befestigungselementes 7 und dem Innendurchmesser D3 des schellenförmigen Prallelementes 3 ergibt.

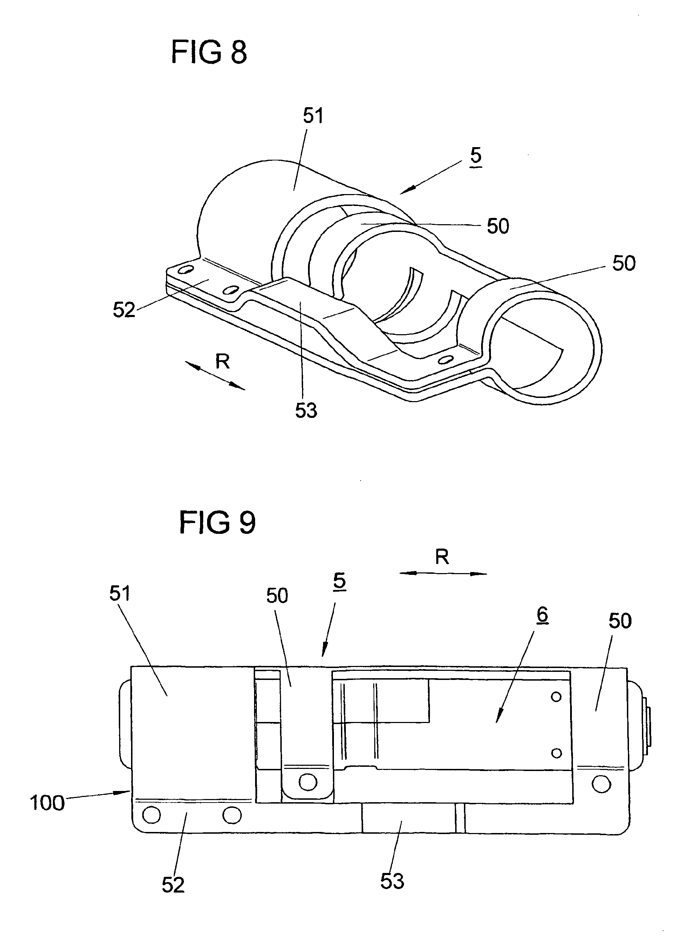

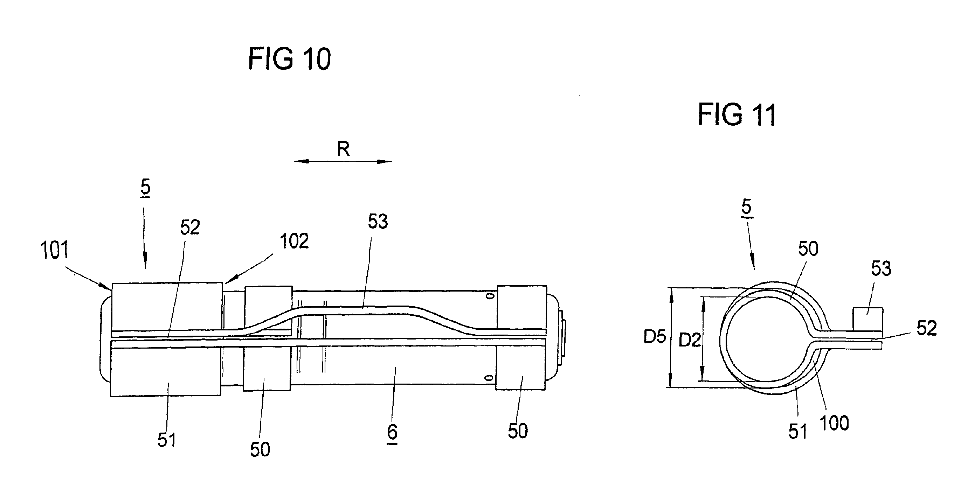

In den Figuren 8 bis 11 ist die erfindungsgemäße Gasleitvorrichtung in einer weiteren Ausführungsform gezeigt. Die Gasleitvorrichtung weist eine Aufnahme in Form eines Prallelements 5 auf, das an einem Gasgenerator 6 anordenbar ist.

Die hier gezeigte Ausführungsform integriert das in der Ausführungsform der Figuren 8 und 9 separat ausgeführte Prallelement mit einem Befestigungselement für den Gasgenerator. Der als Rohrgasgenerator 6 ausgebildete Gasgenerator wird dabei von schellenförmigen Bereichen 50 des Prallelementes 5 umschlossen und aufgenommen. Die schellenförmigen Bereiche 50 befinden sich dabei in einem Bereich des Rohrgasgenerators 6, in dem keine Gasausströmöffnungen vorgesehen sind. Im Bereich der Gasausströmöffnungen des Gasgenerators 6 ist ein weiterer schellenförmiger Bereich 51 des Prallelementes 5 vorgesehen, der einen größeren Durchmesser D5 aufweist, als die den Rohrgasgenerator 6 haltenden Schellenbereiche 50. Auf diese Weise wird wiederum zwischen dem schellenförmigen Bereich 51 des Prallelementes 5 und dem Rohrgasgenerator 6 ein Gasleitkanal 100 ausgebildet, der in zwei einander gegenüberliegenden Gasaustrittsbereichen 101, 102 mündet.

Da sowohl die beiden schellenförmigen Bereiche 50, die den Rohrgasgenerator 6 halten, als auch der den Gasstrom leitende schellenförmige Bereich 51 einstückig aus einem einzigen Blech ausgeformt sind, weisen sie einen gemeinsamen "Rücken" auf, der einem Befestigungsbereich 52 zur Anbindung der Gasleitvorrichtung an eine Fahrzeugstruktur gegenüberliegt. Der Gasleitkanal 100 hat daher einen halbmondförmigen Querschnitt, der sich aus der exzentrischen Lage des Rohrgasgenerators 6 ergibt.

Das Prallelement 5 weist in der gezeigten Ausführungsform weiterhin einen Bügel 53 auf, der eine in diesem Bereich angeordnete Öffnung eines Gassacks geöffnet hält, so dass ein Gasstrom ungehindert in den Gassack einströmen kann.

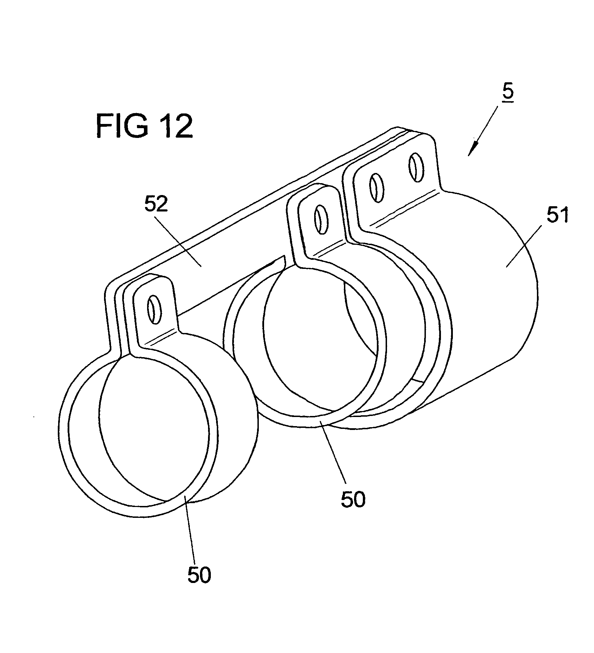

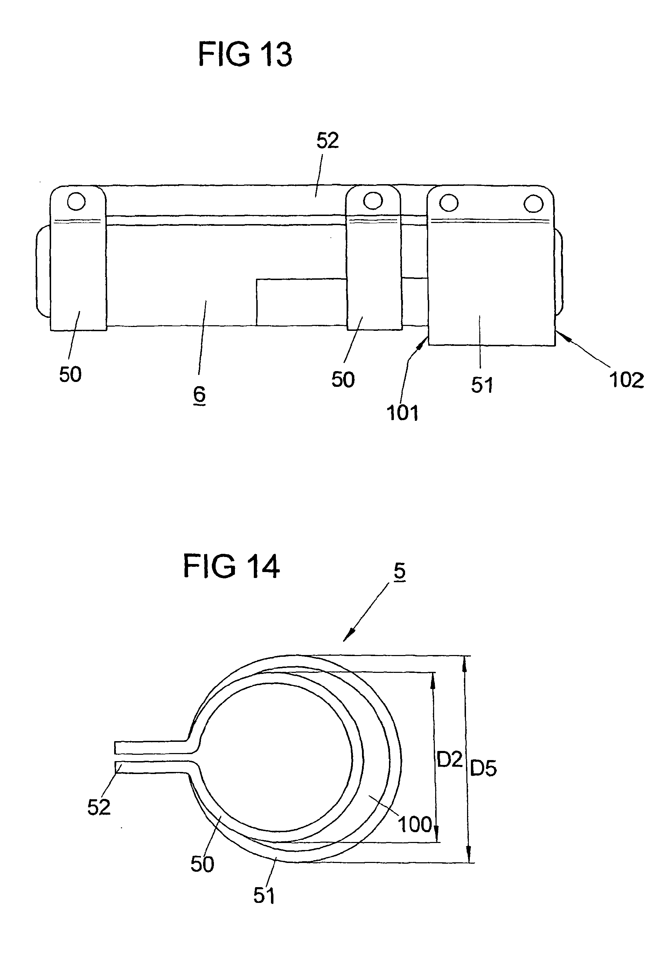

In den Figuren 12 bis 14 ist eine erfindungsgemäße Gasleitvorrichtung in einer weiteren Ausführungsform gezeigt, wobei die Gasleitvorrichtung wiederum eine Aufnahme in Form eines Prallelements 5 aufweist, das an einem Gasgenerator 6 anordenbar ist.

Der Rohrgasgenerator 6 wird von schellenförmigen Bereichen 50 des Prallelementes 5 umschlossen und aufgenommen. Im Unterschied zu der in den Figuren 8 bis 11 gezeigten Ausführungsform ist das Prallelement 5 hier derart ausgestaltet, dass der Befestigungsbereich 52 auf der dem Gasleitkanal 100 entgegengesetzten Seite des Prallelements 5 liegt. Die Gasausströmöffnungen 101, 102 liegen auf diese Weise ebenfalls auf der dem Befestigungsbereich entgegengesetzten Seite der Gasleitvorrichtung. Die einzelnen schellenförmigen Bereiche 50, 51 umschließen den Gasgenerator 6 vollständig.

In einer hier nicht dargestellten Ausführungsform schließen sich zwei Gassäcke derart an das Prallelement 3, 5 an, dass jeweils mindestens ein Gasleitkanal 100 in jedem Gassack mündet. Das Prallelement 3, 5 kann dabei auch im Bereich einer Trennfuge zwischen den beiden Gassäcken angeordnet sein. Durch die durch das Prallelement ausgebildeten Gasleitkanäle können die beiden Gassäcke so gleichmäßig oder in einer vorbestimmten Art und Weise mit einem einzigen Gasgenerator aufgeblasen werden.

## Patentansprüche

1. Gasstromverteiler für ein Seitenairbagmodul zum gezielten Verteilen eines aus den Ausströmöffnungen eines Gasgenerators austretenden Gasstromes in einem durch den Gasgenerator aufzublasenden Gassack, wobei der Gasstromverteiler durch eine den Gasgenerator zumindest im Bereich der Ausströmöffnungen umschließende, formstabile Aufnahme (1, 3, 5) gebildet wird und die Aufnahme (1, 3, 5) Austrittsöffnungen (14a, 14b, 15, 18, 19, 101, 102) aufweist, durch die hindurch aus dem Gasgenerator in das Innere der Aufnahme (10) eingeströmtes Gas austreten und in den aufzublasenden Gassack strömen kann,
**dadurch gekennzeichnet,**
**dass** die Größe mindestens einer Austrittsöffnung (15) einstellbar ist.

2. Gasstromverteiler nach Anspruch 1, **dadurch gekennzeichnet, dass** die Aufnahme (1) aus einem derart formstabilen Material besteht, dass sie durch den aus dem Gasgenerator austretenden Gasstrom nicht verformt wird.

3. Gasstromverteiler nach Anspruch 2, **dadurch gekennzeichnet, dass** die Aufnahme (1) aus Metall oder Druckguss besteht.

4. Gasstromverteiler nach einem der vorhergehenden Ansprüche, **dadurch gekennzeichnet, dass** die Aufnahme (1) ausgebildet ist zum Aufnehmen eines Rohrgasgenerators.

5. Gastromverteiler nach Anspruch 4, **gekennzeichnet durch** einen Aufnahmebereich (10) der Aufnahme (1) zum Umschließen eines Rohrgasgenerators.

6. Gasstromverteiler nach Anspruch 5, **dadurch gekennzeichnet, dass** der Aufnahmebereich (10) rohrförmig ausgebildet ist.

7. Gasstromverteiler nach Anspruch 6, **dadurch gekennzeichnet, dass** der Aufnahmebereich (10) im Querschnitt als stetige Kurve, insbesondere kreisförmig, oder mehreckig ausgebildet ist.

8. Gasstromverteiler nach Anspruch 6 oder 7, **dadurch gekennzeichnet, dass** der Aufnahmebereich (10) im wesentlichen hohlzylindrisch ausgebildet ist.

9. Gasstromverteiler nach einem der Ansprüche 4 bis 8, **dadurch gekennzeichnet, dass** die Aufnahme (1) ausgebildet ist zum Einlassen eines Gasstromes in einen aufzublasenden Gassack entlang der Mantelfläche des Aufnahmebereiches (10), insbesondere in Erstreckungsrichtung des Rohrgasgenerators.

10. Gasstromverteiler nach Anspruch 6, **dadurch gekennzeichnet, dass** mindestens eine Austrittsöffnung (14a, 14b, 15, 18, 19) in dem Mantel des rohrförmigen Aufnahmebereiches (10) vorgesehen ist.

11. Gasstromverteiler nach einem der vorhergehenden Ansprüche, **dadurch gekennzeichnet, dass** die Austrittsöffnung (15) zumindest teilweise mit einer Abdeckung (150) verschlossen ist, die durch den aus dem Gasgenerator austretenden Gasstrom geöffnet wird.

12. Gasstromverteiler nach Anspruch 9 oder 11, **dadurch gekennzeichnet, dass** die mindestens eine Austrittsöffnung (14a, 14b, 15, 18, 19) angeordnet und ausgebildet ist zur Fortleitung des aus dem Gasgenerator austretenden Gasstromes entlang der Mantelfläche des Aufnahmebereiches (10), insbesondere in Erstreckungsrichtung des Gasgenerators.

13. Gasstromverteiler nach einem der vorhergehenden Ansprüche, **gekennzeichnet durch** eine derartige Ausbildung der Aufnahme (1), dass aus einem im Aufnahmebereich (10) aufgenommenen Gasgenerator ausströmendes Gas zumindest teilweise zunächst an einer Innenwand (10b) des Aufnahmebereiches (10) reflektiert wird, bevor es aus der Aufnahme (1) austritt.

14. Gasstromverteiler nach einem der Ansprüche 4 bis 13, **dadurch gekennzeichnet, dass** die Innenwand (10b) des Aufnahmebereiches (10) von dem aufgenommenen Gasgenerator zumindest im Bereich von dessen Ausströmöffnungen beabstandet ist.

15. Gasstromverteiler nach einem der vorhergehenden Ansprüche, **dadurch gekennzeichnet, dass** die Aufnahme (1) unmittelbar mit einem tragenden Teil eines Kraftfahrzeugs verbindbar ist.

16. Gasstromverteiler nach einem der Ansprüche 1 bis 14, **dadurch gekennzeichnet, dass** die Aufnahme (1) mittelbar über eine weitere Baugruppe, z.B. eine Baugruppe des Airbagmoduls, mit einem tragenden Teil eines Kraftfahrzeugs verbindbar ist.

17. Gasstromverteiler nach einem der vorhergehenden Ansprüche, **dadurch gekennzeichnet, dass** er als Generatorträger dient und einen Verbindungsbereich (20) zur Verbindung des Generatorträgers mit einem tragenden Teil eines Kraftfahrzeuges aufweist.

18. Gasstromverteiler nach Anspruch 17, **dadurch gekennzeichnet, dass** der Verbindungsbereich (20) Befestigungsstellen (23) zur Befestigung des Generatorträgers (1) an einer weiteren Baugruppe aufweist.

19. Gasstromverteiler nach einem der Ansprüche 17 oder 18, **dadurch gekennzeichnet, dass** der Verbindungsbereich (20) durch einen Flansch gebildet wird.

20. Gasstromverteiler nach Anspruch 19, **dadurch gekennzeichnet, dass** der Flansch von dem Aufnahmebereich (10) des Generatorträgers (1) absteht.

21. Gasstromverteiler nach einem der Ansprüche 17 bis 20, **dadurch gekennzeichnet, dass** der Aufnahmebereich (10) und der Verbindungsbereich (20) des Generatorträgers (1) einstückig ausgebildet sind.

22. Gasstromverteiler nach einem der vorstehenden Ansprüche, **dadurch gekennzeichnet, dass** mindestens ein Bereich der Aufnahme als Prallelement (3, 5) ausgebildet ist und zwischen dem Prallelement (3, 5) und dem Gasgenerator (6) mindestens ein Gasleitkanal (100) zur Leitung des Gasstroms verläuft.

23. Gasstromverteiler nach Anspruch 22, **dadurch gekennzeichnet, dass** der Gasleitkanal (100) im Wesentlichen zwischen der Außenseite des Gasgenerators (6) und der Innenseite des Prallelements (3, 5) verläuft.

24. Gasstromverteiler nach Anspruch 22 oder 23, **dadurch gekennzeichnet, dass** der Gasleitkanal (100) im Wesentlichen zwischen der Außenseite eines den Gasgenerator (6) umschließenden Bereichs der Aufnahme und der Innenseite des Prallelements (3, 5) verläuft.

25. Gasstromverteiler nach einem der Ansprüche 22 bis 24, **dadurch gekennzeichnet, dass** das Prallelement (3, 5) einen im Wesentlichen kreisförmigen Querschnitt hat.

26. Gasstromverteiler nach Anspruch 25, **dadurch gekennzeichnet, dass** die Rohrachse (R) eines als Rohrgasgenerator (6) ausgebildeten Gasgenerators und die Querschnittsachse des Prallelements (3, 5) voneinander beabstandet sind.

27. Gasstromverteiler nach einem der Ansprüche 22 bis 26, **dadurch gekennzeichnet, dass** das Prallelement (5, 51) einstückig mit einem weiteren Bereich der Aufnahme (50, 52) ausgeformt ist.

28. Gasstromverteiler nach einem der Ansprüche 21 bis 26, **dadurch gekennzeichnet, dass** der Gasleitkanal (100) im Wesentlichen einen kreisringförmigen und/oder einen halbmondförmigen Querschnitt aufweist.

29. Gasstromverteiler nach einem der vorstehenden Ansprüche, **dadurch gekennzeichnet, dass** Gasaustrittbereiche (101, 102) des Gasleitkanals (100) und/oder die Austrittsöffnungen (14a, 14b, 15, 18, 19) der Aufnahme (1) in mindestens einen Gassack münden.

30. Gasstromverteiler nach Anspruch 29, **dadurch gekennzeichnet, dass** die Gasaustrittbereiche (101, 102) des Gasleitkanals (100) und/oder die Austrittsöffnungen (14a, 14b, 15, 18, 19) der Aufnahme (1) jeweils in unterschiedliche Kammern des Gassacks und/oder in unterschiedliche Gassäcke münden.

31. Gasstromverteiler nach einem der vorstehenden Ansprüche, **dadurch gekennzeichnet, dass** das Prallelement (3, 5) und/oder die Aufnahme (1) zur Trennung zweier Gassackkammern dient.

32. Gasstromverteiler nach einem der vorstehenden Ansprüche, **dadurch gekennzeichnet, dass** an das Prallelement (3, 5) und/oder der Aufnahme (1) mindestens zwei Gassäcke angebunden werden und jeweils mindestens ein Gasleitkanal (100) und/oder mindestens eine Austrittsöffnung (14a, 14b, 15, 18, 19) in jeweils einen Gassack mündet.

33. Gasstromverteiler nach Anspruch 32, **dadurch gekennzeichnet, dass** eine zwischen zwei Gassäcken verlaufende Trennfuge im Bereich des Prallelements (3, 5) und/oder der Aufnahme (1) verläuft.

34. Gasstromverteiler nach Anspruch 33, **dadurch gekennzeichnet, dass** die Trennfuge über das Prallelement (3, 5) und/oder die Aufnahme (1) gasdicht abgespannt werden kann.

35. Gasstromverteiler nach einem der vorstehenden Ansprüche, **dadurch gekennzeichnet, dass** die Funktion des Prallelements (3, 5) und/oder der Aufnahme (1) bei plastischer Verformung erhalten bleibt.

36. Gasstromverteiler nach einem der vorhergehenden Ansprüche in einem Seitenairbagmodul.

37. Seitenairbagmodul mit
- einem Gasgenerator zum Aufblasen eines Gassackes und
- einem Gasstromverteiler nach einem der vorhergehenden Ansprüche.

38. Seitenairbagmodul nach Anspruch 37 mit einem durch den Gasgenerator aufblasbaren Gassack, wobei der Aufnahmebereich (10) des Gasstromverteilers (1) innerhalb des Gassackes angeordnet ist.
